# EUROPEAN PATENT APPLICATION

(11) **EP 4 738 223 A1**
(43) Date of publication of application: **06.05.2026**
(21) Application number: 24306823.6
(22) Date of filing: 29.10.2024
(51) Int. Cl.: G06Q 20/32, G06Q 20/34, G06Q 20/40, H04B 17/318, H04W 4/02

(54) **METHOD FOR PREVENTING THE LOSS OF A SMART CARD**

(71) Applicant: THALES DIS FRANCE SAS, 92190 Meudon (FR)
(72) Inventor: ZEAMARI, Ali, 13013 Marseille (FR)
(74) Representative: Grevin, Emmanuel

(57) **Abstract**

The invention is a method for preventing the loss of a smart card (10) of a user (50) in which upon detection of a communication between the smart card and a terminal (20) for performing a transaction, the smart card starts emission of a broadcast signal during a preset period. A portable apparatus (30) of the user evaluates an assessed distance between the smart card and the portable apparatus by analyzing parameters of the broadcast signal. The portable apparatus triggers a loss warning if the assessed distance reaches a threshold before a time equal to the preset period. The smart card uses an internal energy source (11) to power the emission of the broadcast signal and the preset period is longer than a duration during which the transaction is carried out.

## Description

### (Field of the invention)

The present invention relates to methods for preventing the loss of smart cards. It relates particularly to methods for preventing the loss of a smart cards which could participate to transactions with a coupled terminal.

### (Background of the invention)

Payment cards are widely used for purchasing goods or services. Some of them are used in contact mode where they are inserted in the reader of a financial terminal to perform a financial transaction like a payment or a cash withdrawal. When the transaction is complete, the terminal may emit a sound until the card is removed from the reader to make the user think to retrieve their card.

### (Summary of the Invention)

Contactless payment cards are convenient since they allow fast payments. With the deployment of contactless payment cards, a financial transaction can be performed through a tap (i.e. bringing the card closer to the reader) to the reader of the terminal and the terminal cannot detect that the user has forgotten their card at the place of the financial transaction.

In the event that, after an in-person transaction, a contactless payment card was forgotten by the cardholder in a store or in an Automated Teller Machine (ATM), the card could be improperly used by a person who found it.

Such a risk is increased by the fact that some contactless payment cards may be used to perform financial transactions without requesting the consent of the genuine user (by entering a PIN code for instance) for low value amounts.

The invention aims at solving the above-mentioned technical problem.

An object of the present invention is a computer-implemented method for preventing the loss of a smart card of a user. The method comprises the steps of:
- upon detection of a communication between the smart card and a terminal for performing a transaction, starting, by the smart card, an emission of a broadcast signal during a preset period;

evaluating, by a portable apparatus of the user, an assessed distance between the smart card and the portable apparatus by analyzing parameters of the broadcast signal;
triggering a loss warning by the portable apparatus if the assessed distance reaches a threshold before a time equal to said preset period;
the smart card uses an internal energy source to power the emission of the broadcast signal and the preset period is longer than a duration during which the transaction is carried out.

Advantageously, the portable apparatus may evaluate the assessed distance by measuring an evolution of a strength of the broadcast signal.

Advantageously, the portable apparatus may evaluate the assessed distance by measuring an evolution of a time of transport of the broadcast signal.

Advantageously, the smart card may comprise a secure chip which triggers starting of the emission of the broadcast signal upon reception of a first transaction data sent by the terminal.

Advantageously, the smart card may comprise a power manager which triggers starting of the emission of the broadcast signal upon detection of a start of a supply of energy by the terminal.

Advantageously, the broadcast signal may be a broadcast Bluetooth Low Energy advertising.

Advantageously, the portable apparatus may be a phone, a personal digital assistant (PDA), or a connected wearable device like a connected ring, a connected bracelet, a connected keyfob or an electronic watch.

Advantageously, the smart card may be a payment card, the terminal may be a Point-Of-Sale terminal, and the transaction may be a payment transaction.

Advantageously, the smart card may be a payment card, the terminal may be an automated teller machine, and the transaction may be a cash withdrawal.

Advantageously, the smart card may be an access control device, and the terminal may be an access control terminal designed to authorize access to a physical or a digital area.

Another object of the present invention is a system for preventing the loss of a smart card of a user. The system comprises the smart card and a portable apparatus of the user. Upon detection of a communication between the smart card and a terminal for performing a transaction, the smart card is configured to start an emission of a broadcast signal during a preset period. The portable apparatus is configured to evaluate an assessed distance between the smart card and the portable apparatus by analyzing parameters of the broadcast signal. The portable apparatus is configured to trigger a loss warning if said assessed distance reaches a threshold before a time equal to said preset period. The preset period is longer than a duration during which the transaction is carried out, and the smart card is configured to use an internal energy source to power the emission of the broadcast signal.

Advantageously, the portable apparatus may be configured to evaluate the assessed distance by measuring an evolution of a strength of the broadcast signal.

Advantageously, the portable apparatus may be configured to evaluate the assessed distance by measuring an evolution of a time of transport of the broadcast signal.

Advantageously, the smart card may comprise a secure chip which is configured to trigger starting of the emission of the broadcast signal upon reception of a first transaction data sent by the terminal.

Advantageously, the smart card may comprise a power manager which is configured to trigger starting of the emission of the broadcast signal upon detection of a start of a supply of energy by the terminal.

Advantageously, the smart card may have one of the following form factors: a card compliant with ISO/CEI 7810 ID-1 format, a car key, a USB token, a passport, or a e-bracelet.

### (Brief description of the drawings)

Other characteristics and advantages of the present invention will emerge more clearly from a reading of the following description of a number of preferred embodiments of the invention with reference to the corresponding accompanying drawings in which:
Fig. 1 shows an exemplary flow diagram for providing the cardholder with a warning to prevent loss of the smart card according to an example of the invention;
Fig. 2 shows a diagram of architecture of system comprising the smart card and the portable apparatus of the cardholder according to an example of the invention; and
Fig. 3 shows a diagram of architecture of a smart card according to an example of the invention.

### (Detailed description of the preferred embodiments)

Smart cards are portable small devices comprising a microprocessor and an operating system for computing treatments. They may comprise services applications like Payment, Access control or Telecom applications. Such smart cards may comprise a plurality of memories of different types, like non-volatile memory and volatile memory. They are considered as tamper-resistant (or "secure") because they are able to control the access to the data they contain and to authorize or not the use of data by other machines. A smartcard may also provide computation services based on cryptographic components.

Smartcards have limited computing resources and limited memory resources. They may be intended to connect a host machine which provides them with electric power either in contact mode or contactless mode for performing transactions.

Some smart cards may embed an internal energy source like a battery.

Contact smart cards are designed to communicate according to at least one contact protocol like ISO/IEC7816 T=0 or T=1 communication protocols for instance. Contactless smart cards are designed to communicate according to at least one contactless protocol like a protocol defined by ISO/IEC 14443 standard for example.

In the present document, a contactless card means a card having a contactless interface only or a card having a dual interface able to communicate in both contact and contactless mode.

The invention may apply to any types of smart card. The invention is well suited for contactless payment cards and may also apply to cards dedicated to different types of transaction like identity cards, loyalty cards, public transit cards or access control cards.

The invention may apply to wide range of smart card having different kinds of form factor like a conventional smart card having the ID-1 format as defined by ISO/CEI 7810, a car key, an USB token/dongle, a passport, an identity document, or a wearable device like a communicating bracelet or a communicating ring for instance.

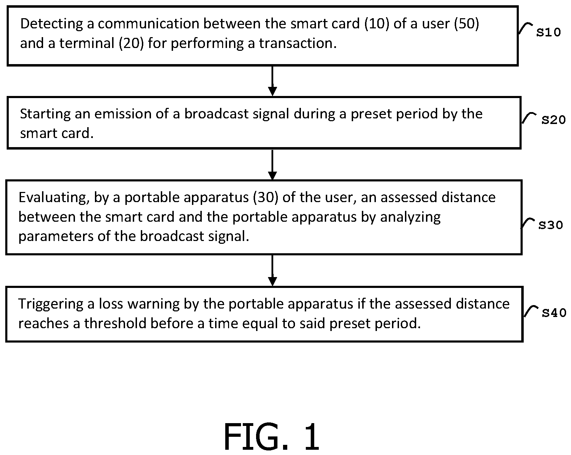

Figure 1 depicts an exemplary flow diagram for providing the cardholder with a warning to prevent loss of the smart card according to an example of the invention.

In this example, the smart card 10 is a payment instrument associated with a cardholder (i.e. bank customer) for payment or cash withdrawal.

The smart card 10 comprises an internal energy source 11 which may be a battery for instance.

The cardholder (also called user) is assumed to wear the smart card 10 and a portable apparatus 30 separate from the smart card 10. The portable apparatus 30 may be a phone, a personal digital assistant (PDA) or a connected wearable device like a connected ring, a connected bracelet, a connected key fob or an electronic watch for instance.

The portable apparatus 30 is assumed to embed a wireless interface which is set in listening mode. In other words, the portable apparatus 30 is waiting to receive a signal on its wireless interface.

In a first step S10, the smart card 10 detects that the card 10 is in communication with a terminal 20 for performing a transaction. As described in more detail below, the detection may rely on detecting the presence of power provided by the terminal, the receipt of a signal emitted by the terminal, or the receipt of a command sent by the terminal.

Upon detection of the communication between the smart card and the terminal, the smart card 10 starts the emission of a broadcast signal during a preset period. (Step S20).

The smart card uses its internal energy source 11 to power the emission of the broadcast signal during the preset period. So, even if the card can no longer be supplied by the terminal, it continues to emit the broadcast signal.

The preset period is set to be longer than the duration during which the transaction is carried out. Depending on the type of transaction in which the card is involved, the value of preset period can be set to be 20%, 50%, 200% or 1000% (or even more) longer than the maximum time of a transaction. For example, assuming that the maximum time of a payment transaction is 25 seconds, the preset period may be set to 2, 5, 8, 10 or 15 minutes.

Both the nature of the broadcast signal and the value of the preset period have been predefined in the smart card 10 and the portable apparatus 30 at a previous stage (not shown in Figure 1). For instance, a specific application containing settings of both the broadcast signal and the preset period can be installed in the portable apparatus 30. In the same way, the smart card 10 may have been personalized with settings of both the broadcast signal and the preset period.

In some embodiment, the portable apparatus 30 may ignore the broadcast signals it receives that do not have the same physical characteristics as those of its paired smart card 10 in order to avoid being polluted by other cards located in the vicinity. For instance, physical characteristics may encompass modulation form of the emitted signal or physical pattern of the emitted signal.

Once the portable apparatus 30 detects the broadcast signal, it starts a timer and evaluates the distance (called assessed distance) between the smart card 10 and the portable apparatus 30 by analyzing parameters of the received broadcast signal. (Step S30.)

If the assessed distance reaches a threshold before a time equal to said preset period, the portable apparatus triggers a loss warning. (Step S40.)

The loss warning may be an audio signal, a tactile signal (like a vibration) or a displayed signal. The loss warning is intended to immediately warn the cardholder that they are probably forgetting/losing the smart card.

In some embodiments, the portable apparatus 30 may evaluate the assessed distance based on the strength of the received signal. In particular, the portable apparatus may evaluate the assessed distance by measuring an evolution of the strength of the received broadcast signal. The portable apparatus may use a known method to manage the received signal strength indicator (RSSI).

For example, the first time the portable apparatus detects the broadcast signal, the portable apparatus may measure and record the strength of the initial broadcast signal as a reference value. Then, the portable apparatus may compute a dynamic limit which can be a percentage of the reference value (i.e. of the initial strength level of the broadcast signal). For instance, the portable apparatus may be designed to trigger the loss warning as soon as the measured strength level of the received broadcast signal becomes lower than 20% or 50% of the reference value.

In some embodiments, the limit may be a static threshold predefined in the portable apparatus.

In some embodiments, the portable apparatus 30 may evaluate the assessed distance based on a time of transport of the broadcast signal. In particular, the portable apparatus may evaluate the assessed distance by measuring an evolution of the time of transport of the broadcast signal.

In some examples, the portable apparatus 30 may measure the time difference of arrival (TDOA) to evaluate the assessed distance between the transmitter (i.e. smart card) and the receiver (i.e. portable apparatus).

In some examples, the smart card 10 may emit a broadcast signal using Ultra-Wideband (UWB) technology and the portable apparatus 30 may use the UWB positioning which may rely on the Time of Flight (ToF).

For example, the portable apparatus 30 may evaluate the assessed distance based on an evaluation of the time of transport of the broadcast signal by measuring and recording the transport time between the first two received broadcast signals as a reference value. Then, the portable apparatus may compare the transport time with a static limit, or a dynamic limit computed as a percentage of the reference value. For instance, the portable apparatus may be designed to trigger the loss warning as soon as the measured transport time of the received broadcast signal becomes 30% or 100% higher than the reference value.

Preferably, the smart card 10 uses the energy supplied by the coupled terminal 20 to power its internal physical components that contributes to the on-going transaction. In other words, the internal energy source 11 is essentially used for the emission of the broadcast signal.

In all embodiments, the smart card stops using its internal energy source 11 at the end of the preset period.

It is to be noted that the fact that the portable apparatus 30 is configured to listen to the smart card during a time equal (a tolerance margin may be applied) to the preset period during which the card is assumed to emit the broadcast signal.

As can be understood by those skilled in the art, the invention is not restricted to payment cards operating a payment transaction with a Point-Of-Sale terminal or a cash withdrawal with an automated teller machine.

The invention may also apply to a loyalty card intended to operate a transaction with a dedicated terminal, to an identity card intended to be controlled by a terminal of a security officer, or to a vehicle key which operates a transaction to unlock a vehicle (like a car) for instance.

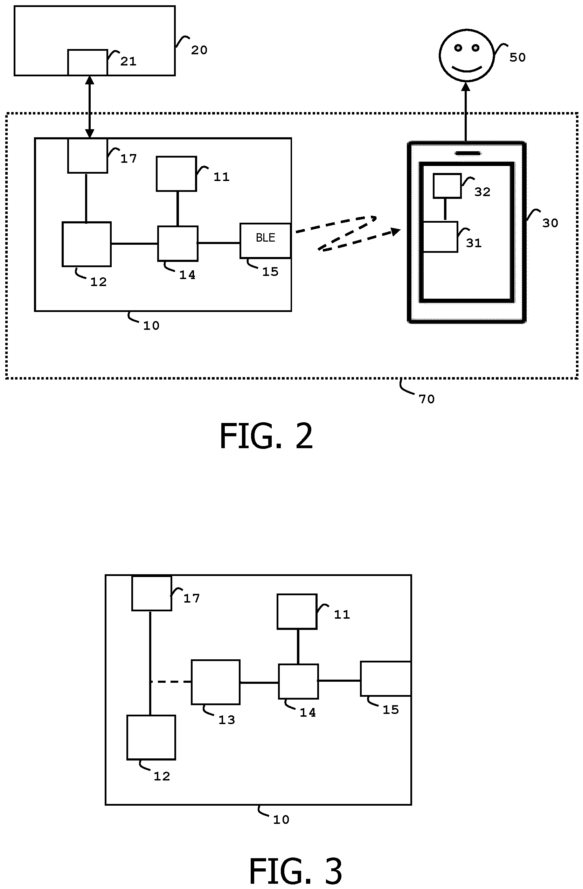

Figure 2 depicts a diagram of architecture of system 70 comprising a smart card 10 and a portable apparatus 30 of the cardholder 50 according to an example of the invention.

In this example, the smart card 10 is a payment card assigned to the user.

The smart card 10 comprises a secure chip 12 (also called secure element), an internal energy source 11 and a physical communication interface 17 which is designed to exchange data for performing a transaction with a conventional terminal 20 (e.g. a payment terminal for instance). The internal energy source 11 can be an electric cell, a battery or a capacitor.

In some embodiments, the communication interface 17 may be a contact interface (i.e. requiring the card to be inserted in the reader 21 of the terminal) able to communicate using a T=0 or T=1 communication protocol as defined by ISO/IEC 7816 standard for instance. In some embodiments, the communication interface 17 may be a contactless interface able to communicate and operate according to a contactless protocol complying with ISO/IEC 14443 standard for example.

The secure chip 12 comprises a hardware processor, a working memory (which may be a RAM) and a non-volatile memory that stores an operating system and program instructions that are executed by the processor to perform the features of the secure chip.

The smart card 10 comprises a broadcast manager 15 which is designed to send data in wireless mode. Preferably, the broadcast manager 15 is compliant with Bluetooth Low Energy^{©} (BLE) or UWB. The broadcast manager 15 can be linked to the secure element 12 through a switch unit 14.

The broadcast manager 15 is designed to manage emission of the broadcast signals. Preferably, the broadcast manager 15 can be designed to manage BLE advertising emissions and act as a BLE beacon.

In some embodiment, the secure chip 12 may be configured to trigger the switch unit 14 which in turn can activate the supply of energy to the broadcast manager 15 by the internal energy source 11. Thus, the start of the emission of the broadcast signal could be controlled by the secure chip 12 upon detection of the start of a transaction with the terminal 20. For instance, the secure chip can be configured to trigger starting of the emission of the broadcast signal upon reception of the first data (or command) of a transaction sent by the terminal.

Preferably, the portable apparatus 30 is a phone. Alternatively, the portable apparatus 30 may be a personal digital assistant (PDA), or a connected wearable device like a connected ring, a connected bracelet, a connected key fob or an electronic watch.

The portable apparatus 30 comprises a spying application 32 and a wireless interface 31 compliant with the broadcast manager 15 of the smart card 10. For instance, the wireless interface 31 can comprise a Bluetooth Low Energy^{©} (BLE) receiver.

The wireless interface 31 can configured to scan for BLE data continuously or at regular intervals.

The spying application 32 is configured to monitor the received broadcast signals, to evaluate the assessed distance between the smart card 10 and the portable apparatus 30, and to trigger a loss warning by if the assessed distance reaches a threshold before a time equal to the preset period.

In some embodiments, the broadcast manager 15 can be configured to generate (using a cryptographic function and/or a preset key) and include in the broadcast signal a cryptographic data. On its side, the spying application 32 can be configured to check the validity of the cryptographic data using a predefined cryptographic function/algorithm. For instance, the cryptographic data can be a hash computed using a hash function like SHA256 for instance or a specific value enciphered using a key. The spying application 32 can be configured to discard received broadcast signals whose cryptographic data is invalid. In other words, the spying application 32 can be configured to evaluate the assessed distance between the smart card 10 and the portable apparatus 30 by using only the broadcast signals whose cryptographic data is valid to avoid interference with other nearby smart cards or wireless devices. In such a case, the smart card 10 and the portable apparatus 30 have been paired during a previous stage to set the appropriate required cryptographic function/or keys.

Figure 3 depicts a diagram of architecture of a smart card 10 according to another example of the invention.

In this example, the smart card 10 is an access control card assigned to a user.

The smart card 10 comprises a secure chip 12, an internal energy source 11 and a physical communication interface 17 which is designed to exchange data for performing a transaction with a conventional access control terminal 20. Preferably, the internal energy source 11 may be a non-removable a battery. The communication interface 17 may be a contact interface or a contactless interface.

The smart card 10 comprises a broadcast manager 15 which is designed to send data in wireless mode.

The broadcast manager 15 is designed to manage emission of the broadcast signals. Preferably, the broadcast manager 15 can be designed to manage BLE advertising/broadcast emissions.

The smart card 10 comprises a power manager 13 linked to communication interface 17 and able to detect that a coupled terminal 20 started providing energy supply to the card 10 through the communication interface 17. The power manager 13 may be linked through a wired link or a wireless (radio frequency) link.

The broadcast manager 15 can be linked to the power manager 13 through a switch unit 14.

The power manager 13 can be configured to trigger starting of the emission of the broadcast signal upon detection of a start of a supply of energy by the terminal. So, the start of the emission of the broadcast signal could be controlled by the power manager 13 upon detection of the availability of energy provided by the coupled terminal 20 (either through a wired link in contact mode or through an electromagnetic field generated by the reader of the terminal in contactless mode.)

The fact that the internal source 11 of energy of the card remains unused most of the time (i.e. except when a transaction occurs) is an advantage of the invention.

Thanks to some embodiments of the invention, the limited use of the internal source of energy (by the card) allows significant energy savings which extend the life of the internal energy source and therefore of the smart card, particularly when the energy source is not replaceable or rechargeable.

Thanks to some embodiments of the invention, the limited use of the internal source of energy limits the time radiation is emitted by the smart card near the user's body which is preferable for health reasons.

Thanks to some embodiments of the invention, the limited use of the internal source of energy allows to embed a reduce energy source (e.g. battery with a reduced size) into the card body. On the one hand, this allows savings on the cost of the components, and on the other hand, it facilitates the integration of the component in the card body by reducing the constraints concerning the location.

Some embodiments of the invention allow to avoid the card loss when the user drops the card after the transaction whether the card was used in contact mode or contactless mode for the transaction.

The card loss detection is transparent to the user compared to a conventional use of the smart card. The user performs the transaction as usual without to do any new action or special gesture to benefit from the advantages of the invention.

The invention is not limited to the described embodiments or examples. In particular, a smart card may be paired (i.e. sharing at least the same value of preset period) with two or more portable apparatus of the cardholder and simultaneously tracked by these devices. Likewise, a portable apparatus may be set to track the distance of more than one smart card. The described features of the presented embodiments may be combined as can be understood by those skilled in the art.

## Claims

1. A computer-implemented method for preventing the loss of a smart card (10) of a user (50), wherein said method comprises:
upon detection of a communication between the smart card and a terminal (20) for performing a transaction, starting, by the smart card, an emission of a broadcast signal during a preset period;
evaluating, by a portable apparatus (30) of the user, an assessed distance between the smart card and the portable apparatus by analyzing parameters of the broadcast signal;
triggering a loss warning by the portable apparatus if the assessed distance reaches a threshold before a time equal to said preset period;
wherein the smart card uses an internal energy source (11) to power the emission of the broadcast signal and wherein the preset period is longer than a duration during which the transaction is carried out.

2. The method according to claim 1, wherein the portable apparatus evaluates the assessed distance by measuring an evolution of a strength of the broadcast signal.

3. The method according to claim 1, wherein the portable apparatus evaluates the assessed distance by measuring an evolution of a time of transport of the broadcast signal.

4. The method according to any one of claims 1 to 3, wherein the smart card comprises a secure chip (12) which triggers starting of the emission of the broadcast signal upon reception of a first transaction data sent by the terminal.

5. The method according to any one of claims 1 to 3, wherein the smart card comprises a power manager (13) which triggers starting of the emission of the broadcast signal upon detection of a start of a supply of energy by the terminal.

6. The method according to any one of preceding claims, wherein the broadcast signal is a broadcast Bluetooth Low Energy advertising.

7. The method according to any one of preceding claims, wherein the portable apparatus (30) is a phone, a personal digital assistant, or a connected wearable device.

8. The method according to any one of preceding claims, wherein the smart card is a payment card, the terminal (20) is a Point-Of-Sale terminal, and the transaction is a payment transaction or wherein the smart card is a payment card, the terminal is an automated teller machine, and the transaction is a cash withdrawal.

9. The method according to any one of claims 1 to 7, wherein the smart card is an access control device, and the terminal is an access control terminal designed to authorize access to a physical or a digital area.

10. A system (70) for preventing the loss of a smart card (10) of a user (50), wherein said system comprises the smart card and a portable apparatus (30) of the user,
wherein, upon detection of a communication between the smart card and a terminal (20) for performing a transaction, the smart card is configured to start an emission of a broadcast signal during a preset period;
wherein, the portable apparatus is configured to evaluate an assessed distance between the smart card and the portable apparatus by analyzing parameters of the broadcast signal;
wherein the portable apparatus is configured to trigger a loss warning if said assessed distance reaches a threshold before a time equal to said preset period;
wherein the preset period is longer than a duration during which the transaction is carried out; and
wherein the smart card is configured to use an internal energy source (11) to power the emission of the broadcast signal.

11. The system according to claim 10, wherein the portable apparatus is configured to evaluate the assessed distance by measuring an evolution of a strength of the broadcast signal.

12. The system according to claim 10, wherein the portable apparatus is configured to evaluate the assessed distance by measuring an evolution of a time of transport of the broadcast signal.

13. The system according to any one of claims 10 to 12, wherein the smart card comprises a secure chip (12) which is configured to trigger starting of the emission of the broadcast signal upon reception of a first transaction data sent by the terminal.

14. The system according to any one of claims 10 to 12, wherein the smart card comprises a power manager (13) which is configured to trigger starting of the emission of the broadcast signal upon detection of a start of a supply of energy by the terminal.

15. The system according to any one of claims 10 to 14, wherein the smart card has one of the following form factors: a card compliant with ISO/CEI 7810 ID-1 format, a car key, a USB token, a passport, or a e-bracelet.
